# EUROPÄISCHE PATENTSCHRIFT

(11) **EP 2 714 518 B1**
(45) Veröffentlichungstag und Bekanntmachung des Hinweises auf die Patenterteilung: **01.04.2020**
(21) Anmeldenummer: 12733406.8
(22) Anmeldetag: 31.05.2012
(51) Int. Cl.: B64D 29/08, F02C 7/042

(54) **FLUGGASTURBINENTRIEBWERK**
AIRCRAFT GAS TURBINE ENGINE
MOTEUR À TURBINE À GAZ D'AÉRONEF

(30) Priorität: 01.06.2011 DE 102011103163
(43) Veröffentlichungstag der Anmeldung: 09.04.2014
(73) Patentinhaber: Rolls-Royce Deutschland Ltd & Co KG, 15827 Blankenfelde-Mahlow (DE)
(72) Erfinder: TODOROVIC, Predrag, 15827 Blankenfelde-Mahlow (DE)
(74) Vertreter: Hoefer & Partner Patentanwälte mbB
(86) Internationale Anmeldenummer: PCT/EP2012/002323
(87) Internationale Veröffentlichungsnummer: WO 2012/163538

(56) Entgegenhaltungen:
- EP-A2- 2 199 204
- WO-A1-2009/101273
- FR-A1- 2 942 457
- US-B1- 6 340 135

## Beschreibung

Die Erfindung bezieht sich auf ein Gasturbinentriebwerk mit einer Triebwerksverkleidung (nacelle), welche das Gasturbinentriebwerk, insbesondere ein Kerntriebwerk sowie einen dieses umgebende Nebenstromkanal umgibt.

Triebwerksverkleidungen von Fluggasturbinentriebwerken umfassen eine Vielzahl von Baugruppen und Bauelementen, die komplex aufgebaut sind und gewartet werden müssen. Diese sind beispielsweise der Einströmbereich (Lufteinlass), das Fan-Gehäuse sowie die Schubumkehrvorrichtung und die Austrittsdüse des Nebenstromkanals. Der Einströmbereich umfasst dabei eine Enteisungsvorrichtung sowie akustische Dämpfungsmittel an seiner Innenwandung, Sensoren oder ähnliche Elemente. Um Wartungsarbeiten an dem Triebwerk durchzuführen, ist es aus dem Stand der Technik bekannt, einzelne Teilbereiche der Triebwerksverkleidung abzumontieren oder klappenartig oder türartig zu öffnen. Dies erfordert einen hohen, zusätzlichen Konstruktionsaufwand und bedingt damit verbunden eine Vielzahl zusätzlicher Bauteile. Weiterhin ist der Wartungsaufwand nicht unerheblich, da eine Vielzahl von Elementen demontiert oder geöffnet werden müssen, um Zugang zu den relevanten Baugruppen zu schaffen. Insgesamt ergibt sich dabei auch ein hohes Gesamtgewicht der Konstruktion.

Die EP 2 199 204 A2 beschreibt ein Fluggasturbinentriebwerk nach dem Oberbegriff des Anspruchs 1, mit einer Triebwerksverkleidung, welche ein Kerntriebwerk rohrartig umgibt. Ein einströmseitiger Teil der Triebwerksverkleidung ist dabei rohrförmig oder teilrohrförmig ausgebildet und kann teleskopartig gegen die Strömungsrichtung verschoben werden. Diese Verschiebung erfolgt ausschließlich zum Zwecke der Wartung und um die Strukturelemente, insbesondere im Bereich des Fans, zugänglich zu machen. Ähnliche Konstruktionen sind aus der FR 2 942 457 A1 und der WO 2009/101273 A1 vorbekannt.

Die US 6 340 135 B1 beschreibt ein Gasturbinentriebwerk mit einer Triebwerksverkleidung, wovon ein einströmseitiger Teilbereich axial entgegen der Strömungsrichtung und mittels Teleskopelementen in eine Wartungsposition verschiebbar ist.

Der Erfindung liegt die Aufgabe zugrunde, ein Gasturbinentriebwerk zu schaffen, welches bei einfachem Aufbau und einfacher, kostengünstiger Herstellbarkeit eine gute Zugänglichkeit und gute Wartungsmöglichkeiten aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass zumindest ein einströmseitiger Teil der Triebwerksverkleidung teleskopartig gegen die Strömungsrichtung verschiebbar ist. Diese teleskopartige Verschiebung erfolgt im Wesentlichen in Axialrichtung, so dass es möglich ist, durch eine einfache Verschiebung des rohrartigen Einströmbereichs wesentliche Bauelemente des Triebwerks zugänglich zu machen.

Die erfindungsgemäß vorgesehene Verschiebbarkeit des einströmseitigen Teils der Triebwerksverkleidung lässt sich in einfacher Weise realisieren, wobei es besonders günstig ist, wenn der einströmseitige Bereich mittels einer Teleskop-Schienen-Führung gelagert ist. Diese überträgt das Gewicht des einströmseitigen Teils auch im geöffneten Zustand auf die Triebwerkskonstruktion, so dass die Wartungspersonen keine schweren Teile öffnen oder abtransportieren müssen. Weiterhin erweist sich die Verschiebbarkeit im Hinblick auf die auftretenden Windkräfte als besonders günstig, da, im Vergleich zu Türen oder Klappen, keine zusätzlichen Sicherungsmaßnahmen erforderlich sind.

Der einströmseitige Teil der erfindungsgemäßen Triebwerksverkleidung kann mittels einfacher Riegelmechanismen im betriebsbereiten Zustand verriegelt werden. Diese Verriegelungsmechanismen brauchen nur gelöst werden, um die Verschiebung zu realisieren. Da sich die Verschiebung gegen die Strömungsrichtung des Triebwerks ausrichtet, besteht auch nicht die Gefahr, dass sich der einströmseitige Teil während des Fluges selbsttätig verschieben könnte.

Erfindungsgemäß ist somit ein integriertes Bauteil geschaffen, welches sich teleskopartig verschieben lässt und den Einströmbereich, die Anströmlippe, eine Enteisungsvorrichtung sowie eine Zugänglichkeit zu Komponenten der Fan-Verkleidung schafft. Es ist somit ein einziges Modul geschaffen, welches mit geringstem Aufwand verschiebbar ist.

Erfindungsgemäß kann die Verschiebung entweder von Hand erfolgen, es ist jedoch auch möglich, hierzu einen Hilfsantrieb (elektrisch oder pneumatisch) vorzusehen.

Erfindungsgemäß ergibt sich somit zusätzlich zu der einfachen Bedienbarkeit eine Reduzierung der erforderlichen Teile sowie, damit verbunden, eine Gewichtsreduzierung.

Da weiterhin der einströmseitige Teil der Triebwerksverkleidung als ein integrales Modul verschiebbar ist, ist es möglich, die Außenfläche strömungsoptimiert auszubilden. Die im Stand der Technik durch Klappen, Bedienungshebel oder Ähnliches auftretenden Störungen des Strömungsverlaufes können somit vermieden werden.

Weiterhin ist es besonders günstig, dass an dem teleskopartig verschiebbaren Teil und/oder den nicht verschiebbaren Komponenten Dichtungen vorgesehen werden können, um Strömungsverluste im geschlossenen Zustand zu vermeiden.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Teil-Schnittansicht des teleskopartig verschiebbaren einströmseitigen Teils der Triebwerksverkleidung im geschlossenen Zustand,
- Fig. 3: eine Darstellung, analog Fig. 2, im geöffneten Zustand,
- Fig. 4: eine perspektivische Teil-Schnittansicht des einströmseitigen Teils der erfindungsgemäßen Triebwerksverkleidung,
- Fig. 5: eine Schnittansicht, analog Fig. 2 und 3, und
- Fig. 6: eine vergrößerte Detailansicht des Detailbereichs A gemäß der Fig. 5.

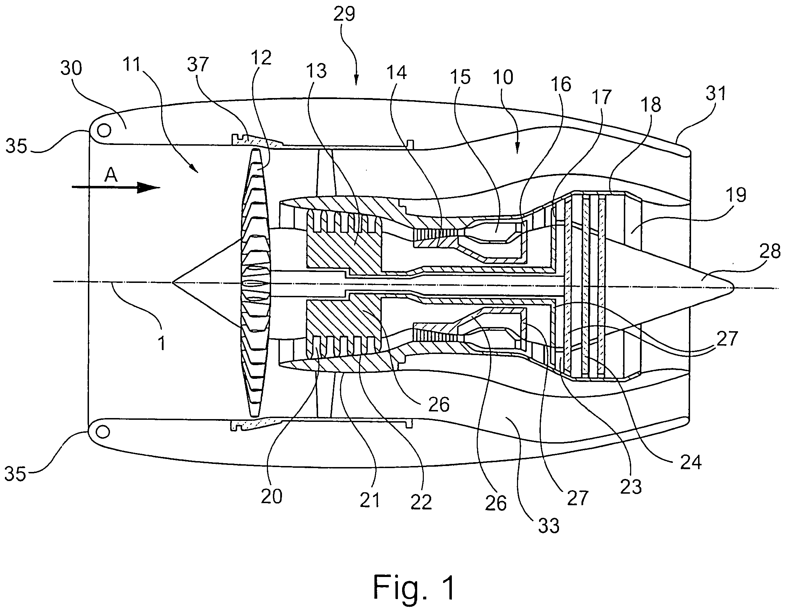

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

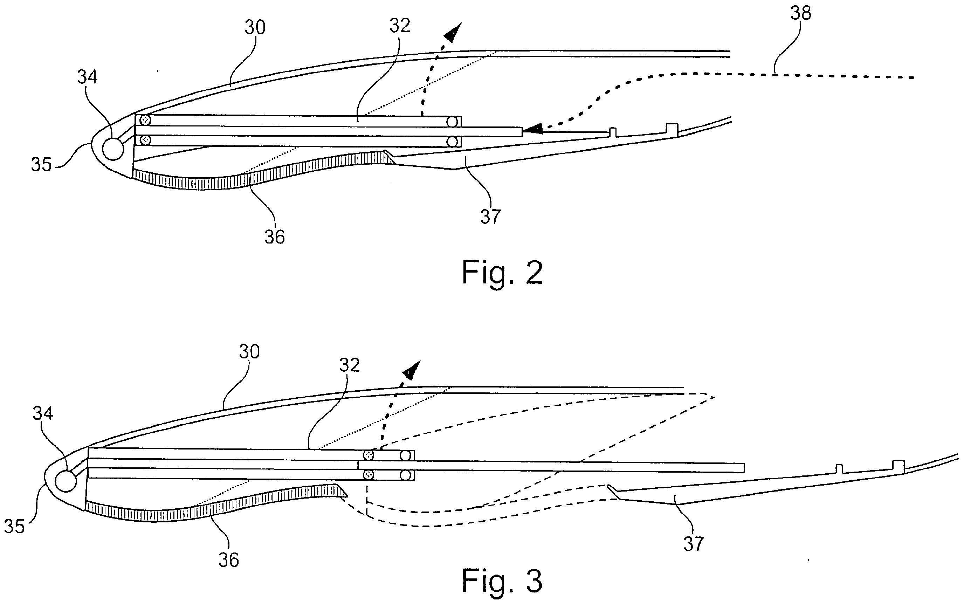

Die Fig. 2 und 3 zeigen eine Teil-Schnittansicht des erfindungsgemäß teleskopartig verschiebbaren Teils 30 im geöffneten Zustand (Fig. 3) sowie im geschlossenen Zustand (Fig. 2). Das Bezugszeichen 34 zeigt in schematischer Darstellung eine thermische Enteisungsvorrichtung eines Anströmbereichs 35. Diese ist gemäß dem Stand der Technik ausgebildet und umfasst beispielsweise einen ringförmigen mit Austrittsöffnungen versehenen rohrartigen Kanal. Der einströmseitige Teil 30 bildet somit den in Strömungsrichtung vorderen Bereich einer Triebwerksverkleidung 29. Die Triebwerksverkleidung 29 umfasst auch ein Schubumkehrelement 31, welches in Fig. 1 nur schematisch dargestellt ist.

Die Fig. 2 und 3 zeigen weiterhin ein Bauteil 36 zur akustischen Dämpfung, welches am radial inneren Wandungsbereich des einströmseitigen Teils 30 ausgebildet ist. Das Bezugszeichen 37 bezeichnet ein Nebenstrom-Fan-Gehäuse.

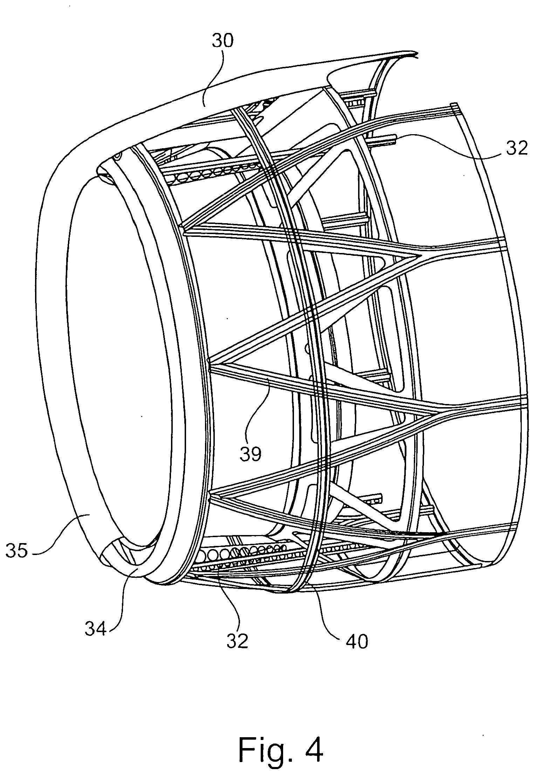

Wie aus den Fig. 2 und 3 ersichtlich ist, ist der einströmseitige Teil 30 mittels einer Teleskopschienenführung 32 verschiebbar (siehe auch Fig. 4). Die Teleskopschienenführung 32 kann auch zusätzlich Mittel zur Zuleitung von Heißluft 38 zu der Enteisungsvorrichtung 34 umfassen. Es ist somit bei der Öffnung (axiale Verschiebung gegen die Strömungsrichtung) des einströmseitigen Teils 30 nicht erforderlich, elektrische, pneumatische oder hydraulische Verbindungen zu demontieren.

Die Fig. 4 zeigt eine perspektivische Teilansicht, aus welcher sich konstruktive Elemente innerhalb des einströmseitigen Teils 30 ersehen lassen. Dabei sind insbesondere Spante 39 sowie Ringträger 40 ersichtlich, die die Stabilität der gesamten Konstruktion erhöhen.

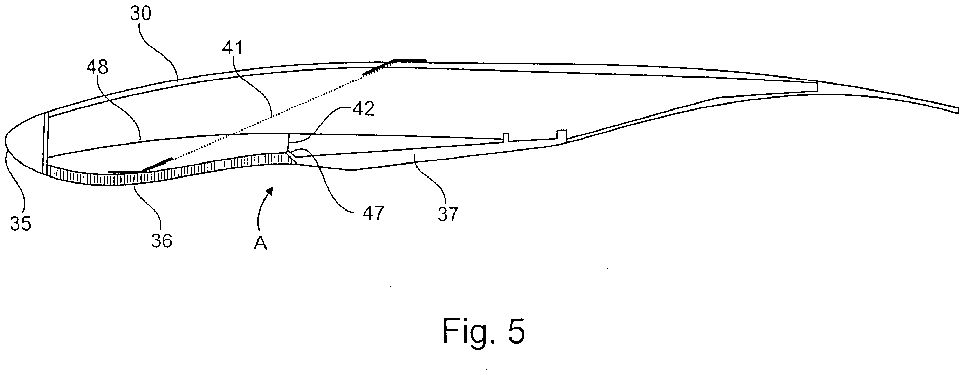

Die Fig. 5 zeigt in schematischer Darstellung, analog Fig. 2, eine Stützstrebe 41, welche Kräfte, die beispielsweise durch einen Vogelschlag auf den Anströmbereich 35 aufgebracht werden, in die Gesamtkonstruktion ableiten.

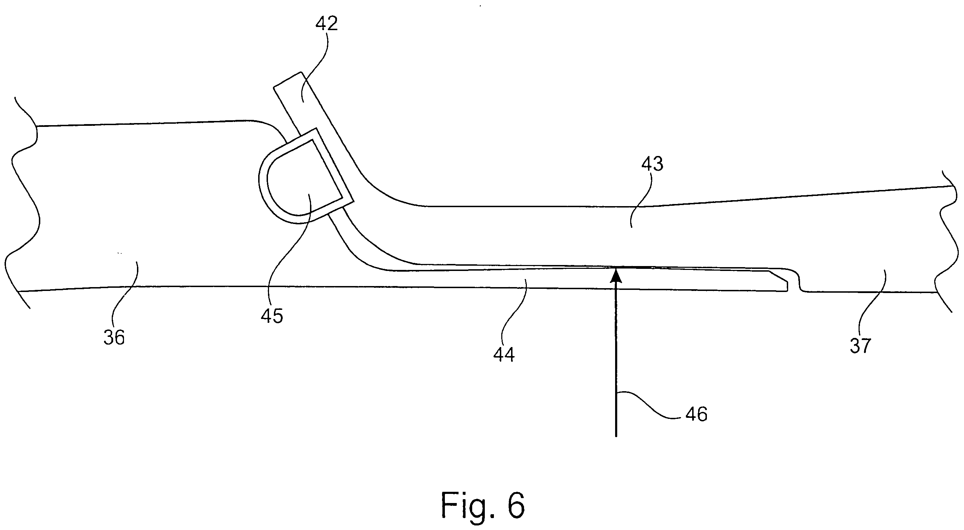

Die Fig. 6 zeigt in vergrößerter Darstellung den Übergangsbereich zwischen dem Bauteil 36, welches eine akustische Dämpfung darstellt und gleichzeitig Teil der Einlasspassage (inlet barrel) ist, und dem Nebenstrom-Fan-Gehäuse 37. Die Fig. 6 zeigt, dass das Nebenstrom-Fan-Gehäuse 37 nach vorne einen verlängerten Bereich 43 mit einer radial nach außen gerichteten Lippe 42 aufweist. Passend hierzu ist an der Einlasspassage das Bauteil 36 (akustische Dämpfung) mit einer Verlängerung 44 versehen, welche sich radial innerhalb des verlängerten Bereichs 43 befindet. Die beiden Teile 43 und 44 bilden somit eine teleskopartige Anordnung, welche aus zwei ringförmigen Bereichen 43 und 44 gebildet ist. Zwischengeschaltet ist eine Dichtung 45, welche als Lippendichtung oder Radialdichtung ausgebildet sein kann.

Der verlängerte Bereich 43 und die Verlängerung 44 bilden an ihrer Kontaktfläche eine gelenkartige Konstruktion, welche "kardanisch" wirkt (gimble joint). Hierzu ist die radial äußere Fläche der Verlängerung 44 mit einer sphärischen Kontur 46 ausgebildet.

Wie sich aus der Zusammenschau der Fig. 5 und 6 ergibt, weist die Lippe 42 in radial nach außen gerichteter Richtung einen Abstand 47 zu einem Längsträger 48 auf. Der Längsträger 48 ist fester Bestandteil der Tragstruktur, während die akustische Dämpfung (Einlasspassage) zusammen mit dem Nebenstrom-Fan-Gehäuse 37 bei einem Fan-Defekt verformt werden. Wird beispielsweise eine Fan-Schaufel (Fan-Blatt) durch einen Vogelschlag getroffen, so führt dies zu einer sinusoiden Verformung des Bauteils 36 und des Nebenstrom-Fan-Gehäuses 37. Damit diese Verformung möglich ist, ist der Abstand 47 vorgesehen. In derartigen Fällen dichtet die Dichtung 45 weiterhin zuverlässig ab, die gelenkartige Abstützung zwischen dem verlängerten Bereich 43 und der Verlängerung 44 (sphärische Kontur 46) führt dazu, dass Kräfte in Y- und Z-Richtung übertragen werden können.

### Bezugszeichenliste:

- 1: Triebwerksachse
- 10: Gasturbinentriebwerk (Kerntriebwerk)
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Triebwerksverkleidung (nacelle)
- 30: einströmseitiger Teil der Triebwerksverkleidung
- 31: Schubumkehrelemente
- 32: Teleskopschienenführung
- 33: Nebenstromkanal
- 34: Enteisungsvorrichtung
- 35: Anströmbereich
- 36: Bauteil zur akustischen Dämpfung
- 37: Nebenstrom-Fan-Gehäuse
- 38: Heißluft
- 39: Spant
- 40: Ringträger
- 41: Stützstrebe
- 42: Lippe
- 43: Verlängerter Bereich
- 44: Verlängerung
- 45: Dichtung
- 46: Sphärische Kontur
- 47: Abstand
- 48: Längsträger

## Patentansprüche

1. Fluggasturbinentriebwerk mit einer Triebwerksverkleidung (29), welche ein Kerntriebwerk rohrartig umgibt, wobei zumindest ein einströmseitiger Teil (30) der Triebwerksverkleidung (29) rohrförmig oder teilrohrförmig ausgebildet ist und teleskopartig gegen die Strömungsrichtung verschiebbar ist, wobei der verschiebbare Teil (30) die äußere Triebwerksverkleidung bis zu einem Schubumkehrelement (31) und die innere Triebwerksverkleidung bis zu einem Nebenstrom-Fan-Gehäuse (37) umfasst, wobei die innere Triebwerksverkleidung ein Bauteil (36) zur akustischen Dämpfung und einen Übergangsbereich zwischen dem Bauteil (36) und dem Nebenstrom-Fan-Gehäuse (37) umfasst, wobei der Übergangsbereich durch einen entgegen der Strömungsrichtung verlängerten Bereich (43) des Nebenstrom-Fan-Gehäuses (37) und eine Verlängerung (44) des Bauteils (36) gebildet ist, wobei der verlängerte Bereich (43) eine radial nach außen gerichteten Lippe (42) aufweist, wobei die Verlängerung (44) sich radial innerhalb des verlängerten Bereichs (43) befindet, wobei zwischen dem verlängerten Bereich (43) und der Verlängerung (44) eine Dichtung (45) angeordnet ist, **dadurch gekennzeichnet, dass**
eine radial äußere Fläche der Verlängerung (44) mit einer sphärischen Kontur (46) ausgebildet ist, um eine kardanisch wirkende, gelenkartige Konstruktion zu bilden.

2. Fluggasturbinentriebwerk nach Anspruch 1, **dadurch gekennzeichnet, dass** der verschiebbare einströmseitige Teil (30) mittels Teleskop-Schienen-Führungen (32) gelagert ist.

3. Fluggasturbinentriebwerk nach Anspruch 2, **dadurch gekennzeichnet, dass** die Teleskop-Schienen-Führungen (32) eine im Wesentlichen axiale Bewegung und/oder zumindest eine teilweise Radialbewegung ermöglichen.

4. Fluggasturbinentriebwerk nach einem der Ansprüche 1 bis 3, **dadurch gekennzeichnet, dass** der einströmseitige Teil (30) manuell oder mittels eines Hilfsantriebs verschiebbar ist.

## Claims

1. Aircraft gas turbine engine having an engine cowling (29) which surrounds a core engine in a tubular manner, at least one inflow-side part (30) of the engine cowling (29) being of tubular or partially tubular configuration and being displaced telescopically counter to the flow direction, the displaceable part (30) comprising the outer engine cowling as far as a thrust reversal element (31) and the inner engine cowling as far as a bypass flow fan housing (37), the inner engine cowling comprising a component (36) for acoustic damping and a transition region between the component (36) and the bypass flow fan housing (37), the transition region being formed by way of a region (43) of the bypass flow fan housing (37), which region (43) is extended counter to the flow direction, and by way of an extension (44) of the component (36), the extended region (43) having a radially outwardly directed lip (42), the extension (44) being situated radially within the extended region (43), and a seal (45) being arranged between the extended region (43) and the extension (44), **characterized in that** a radially outer face of the extension (44) is configured with a spherical contour (46), in order to form a gimballed, joint-like construction.

2. Aircraft gas turbine engine according to Claim 1, **characterized in that** the displaceable inflow-side part (30) is mounted by means of telescopic rail guides (32).

3. Aircraft gas turbine engine according to Claim 2, **characterized in that** the telescopic rail guides (32) make a substantially axial movement and/or at least one partial radial movement possible.

4. Aircraft gas turbine engine according to one of Claims 1 to 3, **characterized in that** the inflow-side part (30) can be displaced manually or by means of an auxiliary drive.

## Revendications

1. Moteur à turbine à gaz d'aéronef comprenant un capotage de moteur (29), qui entoure un moteur central à la manière d'un tube, au moins une partie côté afflux (30) du capotage de moteur (29) étant réalisée sous forme tubulaire ou sous forme de tube partiel et pouvant être déplacée de manière télescopique vers la direction d'écoulement, la partie déplaçable (30) comprenant le capotage de moteur extérieur jusqu'à un élément d'inversion de poussée (31) et le capotage de moteur intérieur jusqu'à un boîtier de soufflante à courant secondaire (37), le capotage de moteur intérieur comprenant un composant (36) pour l'atténuation acoustique et une région de transition entre le composant (36) et le boîtier de soufflante à courant secondaire (37), la région de transition étant formée par une région (43) du boîtier de soufflante à courant secondaire (37) prolongée dans le sens inverse de la direction d'écoulement et un prolongement (44) du composant (36),
la région prolongée (43) présentant une lèvre (42) orientée radialement vers l'extérieur, le prolongement (44) se trouvant radialement à l'intérieur de la région prolongée (43), un joint d'étanchéité (45) étant disposé entre la région prolongée (43) et le prolongement (44),
**caractérisé en ce**
**qu'**une surface radialement extérieure du prolongement (44) est réalisée avec un contour sphérique (46) afin de former une construction de type articulation agissant à la manière d'un cardan.

2. Moteur à turbine à gaz d'aéronef selon la revendication 1, **caractérisé en ce que** la partie déplaçable (30) côté afflux est supportée au moyen de guides de rails télescopiques (32).

3. Moteur à turbine à gaz d'aéronef selon la revendication 2, **caractérisé en ce que** les guides de rails télescopiques (32) permettent un déplacement essentiellement axial et/ou au moins un déplacement radial partiel.

4. Moteur à turbine à gaz d'aéronef selon l'une quelconque des revendications 1 à 3, **caractérisé en ce que** la partie côté afflux (30) peut être déplacée manuellement ou au moyen d'un entraînement auxiliaire.
